# EUROPÄISCHE PATENTSCHRIFT

(11) **EP 0 781 259 B1**
(45) Veröffentlichungstag und Bekanntmachung des Hinweises auf die Patenterteilung: **18.03.1998**
(21) Anmeldenummer: 95932011.0
(22) Anmeldetag: 08.09.1995
(51) Int. Cl.: C04B 35/65, C04B 35/66, F27B 7/28

(54) **FEUERFESTER MÖRTEL UND SEINE VERWENDUNG ZUM VERFUGEN VON FEUERFESTEN OFENAUSKLEIDUNGEN**
REFRACTORY MORTAR AND ITS USE FOR POINTING REFRACTORY KILN LININGS
MORTIER REFRACTAIRE ET SON UTILISATION POUR LE JOINTOIEMENT DE GARNITURES INTERIEURES REFRACTAIRES DE FOURS

(30) Priorität: 16.09.1994 DE 4433047
(43) Veröffentlichungstag der Anmeldung: 02.07.1997
(73) Patentinhaber: FOSBEL GMBH, 53881 Euskirchen (DE)
(72) Erfinder: HAMACHER, Alfons, D-53902 Bad Münstereifel (DE); GAMERS, Klaus, D-40489 Düsseldorf (DE); ISMAILOV, Marat B., Almaty, 480035 (KZ); KSANDOPOULO, Georgy I., Almaty, 480064 (KZ)
(74) Vertreter: Rehders, Jochen, Dipl.-Ing.
(86) Internationale Anmeldenummer: EP9503532
(87) Internationale Veröffentlichungsnummer: WO9608452

(56) Entgegenhaltungen:
- DD-A- 237 435
- GB-A- 1 530 030
- DATABASE WPI, Woche 9417, Derwent Publications Ltd., London (GB); AN 94-143224
- DATABASE WPI, Woche 9306, Derwent Publications Ltd., London (GB); AN 93-051421
- DATABASE WPI, Woche 7409, Derwent Publications Ltd., London (GB); AN 74-15967v

## Beschreibung

Die Erfindung betrifft einen reaktiven, feuerfesten Mörtel zum Verfugen von feuerfesten Ofenauskleidungen aus feuerfesten Steinen, insbesondere für Drehrohröfen.

In der europäischen Patentanmeldung 0 426 848 ist ein feuerfestes Material beschrieben, daß sich als Auskleidungsüberzug für Zement- und Stahlschmelzöfen und Stahlgießpfannen sowie als in einer Verbindungsfuge feuerfeste Steine zu einem Monolith verschweißende Masse einsetzen läßt. Dieses Material wird zur Verarbeitung als exothermes Gemisch mit folgenden Bestandteilen hergestellt: einem Reduktionsmittel aus mindestens einem Metall aus der Gruppe Magnesium, Aluminium, Zirkonium, Silizium oder ihren Legierungen, einem Oxidationsmittel einzeln oder im Gemisch aus Rohdolomit, Chromit, Sulfat, Karbonat eines Metalls aus der Gruppe: Magnesium, Kalzium, Strontium, Barium, Zink, Aluminium, einem feuerfesten Füllmittel einzeln oder im Gemisch aus Periklas, Chromit, feuerfestem Bruch, feuerfestem Oxid, kohlenstoffhaltigen Komponenten, Carbid und Nitrid eines Metalls aus der Gruppe: Aluminium, Silizium, Titan mit folgenden Anteilen:

Reduktionsmittel 6 bis 20 Gewichtsprozent, Oxidationsmittel 20 bis 70 Gewichtsprozent und feuerfestes Füllmittel bis zum Auffüllen auf 100 Gewichtsprozent.

Diesem exothermen Gemisch kann als weiteres Oxidationsmittel Eisen (III)-Oxid oder Alumosilikat hinzugefügt werden. Das Gemisch wird mit Wasser in einer Menge von 2 bis 12 % zu Mörtel verarbeitet und zum Verfugen beim Aufmauern von Feuerfeststeinen verwandt oder als Auskleidung auf die Oberfläche einer bereits vorhandenen feuerfesten Ausmauerung aufgebracht, durch Erwärmen getrocknet und danach gezündet, woraufhin die Masse unter großer Wärmeentwicklung vollständig durchbrennt, versintert und die feuerfesten Steine zu einem Monolith verschweißt.

Die Zusammensetzung dieses bekannten exothermen Mörtels ist grundsätzlich so eingestellt, daß die gesamte Masse nach dem Zünden durch Abbrennen durchreagiert und sich in eine hochfest versinterte keramische Masse umwandelt.

Wird diese exotherme Masse als Mörtel zum Verfugen von feuerfesten Ofenauskleidungen aus feuerfesten Steinen verwendet, soll es in der Fuge über die ganze Steinbreite hindurch abbrennen und die Steine vollflächig zu einem Monolith verschweißen, so daß sich eine aus derart verschweißten Steinen bestehende Ofenauskleidung bei einer notwendigen Reparatur nur mittels vergleichsweise sehr hohem Aufwand hinsichtlich Abbruchtechnik entfernen läßt, selbst wenn nur noch eine geringe Restwandstärke verblieben ist. Eine notwendige Reparatur wird dadurch erheblich verteuert und neben dem Risiko der Verletzung des Stahl-Ofenmantels verlängert sich der Zeitaufwand drastisch.

Auch wenn die feuerfeste Ofenauskleidung nur bereichsweise beschädigt ist, lassen sich die zum Monolith verschweißten Steine nur unter größten Schwierigkeiten und nur durch Zerstören der Steine ausbrechen.

Beim Brennen dieser bekannten exothermen Masse entwickeln sich lokal hohe Temperarturwerte von 1700 bis 2000°C, die die Synthese des Feuerfeststoffes mit einer Struktur gewährleisten, die durch chemische und Diffusionsumsetzung der Komponenten der aktiven Phase des Gemenges miteinander und mit der Oberfläche der Teilchen des Füllmittels ausgebildet wird, und die untereinander und mit der Auskleidung aus feuerfesten Steinen mittels keramischer Bindung fest haften. Die Temperaturfront dringt bis an die Außenseite der feuerfesten Ofenauskleidung, die in der Regel von einem Mantel aus Stahlblech umgeben ist - dies gilt insbesondere für Drehrohröfen -, und dieser Mantel kann nachteiligerweise durch die auf ihn einwirkenden hohen Temperaturen ganz erhebliche Beschädigungen davontragen.

Der Erfindung liegt die Aufgabe zugrunde einen reaktiven, feuerfesten Mörtel zu schaffen, der eine gut haftende feuerfeste, keramische Bindung der feuerfesten Steine einer Ofenauskleidung ergibt, ein einfaches Ausbrechen der Ofenauskleidung nach Beendigung der Feuerfestreise zu erreichen gestattet und der die Ummantelung des Ofens nicht thermisch beschäftigt.

Ausgehend von dieser Aufgabenstellung wird erfindungsgemäß die Verwendung eines reaktiven, feuerfesten Mörtels aus einem Gemisch eines Reduktionsmittels, eines Oxidationsmittels, eines mit Wasser angemachten Binders und eines feuerfesten Füllstoffs zum Verfugen von feuerfesten Ofenauskleidungen aus feuerfesten Steinen, insbesondere für Drehrohröfen, vorgeschlagen, dessen Zusammensetzung so gewählt ist, daß die Reaktion nach einer vorbestimmten Eindringtiefe in die Fugen von selbst verlischt und in den Fugen ein nicht durchgebrannter Teil des Mörtels verbleibt.

Vorzugsweise kann der Mörtel zur Verwendung zum Verfugen von feuerfesten Ofenauskleidung aus feuerfesten Steinen aus 11 bis 17 Trockengewichtsprozent Aluminiumpulver, 18 bis 31 Trockengewichtsprozent Eisenoxid, 8 bis 18 Trockengewichtsprozent in Wasser gelösten Magnesiumsulfat und 44 bis 60 Trockengewichtsprozent Magnesiumoxid bestehen.

Das exotherme Gemisch der vorstehend angegebenen Zusammensetzung weist die Eigenschaft auf, daß es sich mit dem in Wasser gelösten Magnesiumsulfat als Binder wie Mörtel zum Aufmauern von feuerfesten Ofenauskleidungen aus feuerfesten Steinen zum Verfugen derselben verwenden läßt, beim Aufheizen des Ofens zunächst trocknet und sich an der der heißen Seite zugekehrten Oberfläche entzündet, jedoch in der Fuge nach einer vorbestimmbaren Eindingtiefe von selbst verlischt.

Diese Eindringtiefe wird so gewählt, daß einerseits ein guter Verbund der Ofenauskleidung aus feuerfesten Steinen erreicht wird und der Mörtel mindestens die gleiche Feuerfestigkeit wie die feuerfesten Steine aufweist, daß aber der nicht durchgebrannte Teil des Mörtels in der Fuge nur in geringerem Maße an den feuerfesten Steinen haftet, so daß das Ausbrechen der Ofenauskleidung, ganz erheblich erleichtert wird. Des weiteren gelangt die Verbrennungshitze nicht bis an die Auskleidungsummantelung, die daher nicht beschädigt werden kann. Während der Feuerfestreise dringt der beschriebene Prozeß in Abhängigkeit von der Wandstärkenabnahme und insbesondere der sich einstellenden Temperaturverschiebungen entsprechend weiter vor, aber auch bei minimaler Restwandstärke verbleibt auf der kalten Seite eine Zone, in der der Mörtel nicht durchgebrannt ist und somit weder mit den feuerfesten Steinen verschweißt ist, noch die Ofenummantelung thermisch beschädigen kann.

Vorzugsweise kann das Aluminiumpulver mit einem Anteil von vorzugsweise 14,5 Trockengewichtsprozent in pratziger oder kugeliger Form, - nicht plättchenförmig -, vorliegen, das Eisenoxid mit einem Anteil von vorzugsweise 25 Trockengewichtsprozent in Form von Eisenerzkonzentrat oder Zunder vorliegen, das Magnesiumsulfat mit 10 Trockengewichtsprozent und das Magnesiumoxid mit vorzugsweise 50,5 Trockengewichtsprozent in Form möglichst reinem Sintermagnesit oder Periklas vorliegen.

Da für die Eindringtiefe die Reaktivität des Gemischs mit Bezug auf den Wärmeverlust zu den feuerfesten Steinen hin eine Rolle spielt, sollte die Teilchengröße des Aluminiums und des Eisenoxids bei 5 bis 200 µm und die des Magnesiumoxids bei 0,001 bis 2 mm, vorzugsweise bis 1mm liegen.

Versuche haben gezeigt, daß die Verwendung von reaktiveren Reduktionsmitteln wie Magnesiumpulver oder plättchenförmiges Aluminiumpulver in Verbindung mit anderen Oxidationsmitteln wie Kalziumkarbonat, Magnesiumkarbonat, Chromit oder Magnesiumsulfat nicht immer zu einem Selbstverlöschen des Mörtels in den Fugen zwischen den feuerfesten Steinen führt. Dennoch sind auch diese Materialien für die erfindungsgemäße Verwendung geeignet, wenn sich das Mischungsverhältnis so bestimmen läßt, daß der Mörtel selbstverlöschend ist. Mit dem in pratziger oder in kugeliger Form vorliegendem Aluminiumpulver in Verbindung mit dem Eisenoxid in Form von Eisenerzkonzentrat oder Zunder, läßt sich ein Selbstverlöschen stets mit Sicherheit erreichen, wenn diese exotherme Mischung mit inertem Magnesiumoxid mit einem Anteil von 44 bis 60 Trockengewichtsprozent gemischt und nur eine Menge von 8 bis 18 Trockengewichtsprozent in Wasser gelöstes Magnesiumsulfat als Binder hinzugefügt wird. Dieses Selbstverlöschen tritt in Abhängigkeit von der Gesamtwandstärke und den sich einstellenden Temperaturbedingungen nach etwa 50 mm Eindringtiefe von selbst ein, auch wenn die Fugenbreite in weiten Grenzen variiert.

Die Erfindung zeichnet sich somit dadurch aus, daß einerseits auf der heißen Seite der feuerfesten Ofenauskleidung ein Verbund mit dem Mörtel mittels einer keramischen Bindung, die durch die exothermische Reaktion bewirkt wird, vorhanden ist, wodurch die Standfestigkeit der feuerfesten Auskleidung gegenüber herkömmlichem feuerfesten Mörtel ganz erheblich verbessert wird, daß aber andererseits ein Zerlegen der Ofenauskleidung aus feuerfesten Steinen durch Ausbrechen leicht möglich ist, da sich die keramische Bindung nur über einen vorbestimmbaren schmalen Bereich der Fugen zwischen den feuerfesten Steinen der Ofenauskleidung erstreckt. Des weiteren wird eine Beschädigung der Auskleidungsummantelung vermieden, da auf der kalten Seite keine exotherme Reaktion stattfindet bzw. die Temperaturfront nicht bis zur Auskleidungsummantelung vordringt. Dies gilt auch, wenn dieser Mörtel oder ein reaktiverer Mörtel vollflächig als Auskleidungsüberzug auf die Ofeninnenseite der Ofenauskleidung aus feuerfesten Steinen aufgebracht wird. In diesem Fall brennt der Überzug bis zur Oberfläche der feuerfesten Steine durch und verbindet sich damit mittels einer keramischen Bindung. Die Reaktion kommt jedoch in den Fugen auch in diesem Fall, wie beschrieben, nach einer vorbestimmbaren Eindringtiefe zum Stillstand.

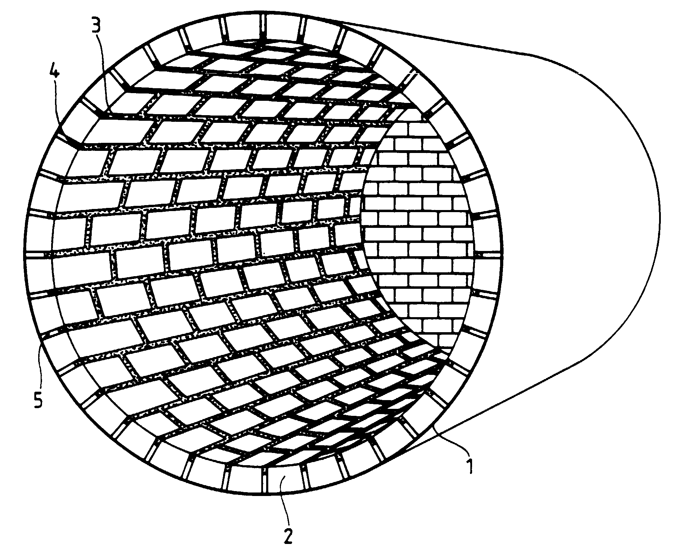

In der Zeichnung ist ein Abschnitt eines Drehrohrofens schematisch perspektivisch dargestellt.

In einer Ummantelung 1 aus Stahlblech ist eine aufgemauerte, feuerfeste Auskleidung aus feuerfesten Steinen 2 angeordnet, deren Fugen 3 mit dem erfindungsgemäßen feuerfesten Mörtel verfugt sind. Der zur heißen Innenseite des Drehrohrofens weisende Teil des Mörtels in den Fugen ist bis zu der mit 4 bezeichneten Tiefe durchgebrannt und versintert und hat sich mit den feuerfesten Steinen 2 nur in diesem Bereich mittels einer keramischen Bindung festverbunden. Der hell dargestellte Bereich 5 stellt den Bereich des Mörtels dar, der nur mit Hilfe des Binders aus Magnesiumsulfat abgebunden ist, ohne jedoch eine festhaftende, monolithische keramische Bindung aufzuweisen. Der durchgebrannte, versinterte Teil 4 des Mörtels macht somit nur einen Bruchteil der Gesamtbreite der feuerfesten Steine aus, so daß zwar zum Innenraum des Drehrohrofens eine homogene, feuerfeste und chemisch widerstandsfähige Oberfläche vorhanden ist, andererseits aber der Verbund nicht so fest ist, daß sich die Steine nicht, ohne sie zu beschädigen, aus dem aufgemauerten Verbund lösen ließen. Des weiteren ist erkennbar, daß die bei dem Durchbrennen des Mörtels in den Fugen 3 entstehende Verbrennungswärme nicht bis in den Bereich der Ummantelung 1 gelangt und diese daher auf keinen Fall beschädigt wird.

Das Entzünden des reaktiven Mörtel erfolgt in einfachster Weise beim Anheizen des Ofens, wobei nur darauf zu achten ist, daß das Anheizen zunächst langsam erfolgt, um die in dem Mörtel enthaltene Feuchtigkeit zu entfernen. Bei etwa 1000°C entzündet sich der Mörtel in den Fugen 3, brennt aber nur bis zu der dunkel an der Stirnseite gekennzeichneten Tiefe 4 durch, wo die Reaktion aufgrund der Wärmeverluste zu den Steinen 2 hin zum Stillstand kommt. Durch die Erwärmung der feuerfesten Steine 2 beim Anheizen wird der Mörtel in den Fugen 3 stark unter Druck gesetzt, was zusätzlich die Haltbarkeit der Verfugung erheblich verbessert.

## Patentansprüche

1. Verwendung eines reaktiven, feuerfesten Mörtels aus einem Gemisch eines Reduktionsmittels, eines Oxidationsmittels, eines mit Wasser angemachten Binders und eines feuerfesten Füllstoffs zum Verfugen von feuerfesten Ofenauskleidungen aus feuerfesten Steinen, insbesondere für Drehrohröfen, dessen Zusammensetzung so gewählt ist, daß die Reaktion nach einer vorbestimmten Eindringtiefe in die Fugen von selbst verlischt und in den Fugen ein nicht durchgebrannter Teil des Mörtels verbleibt.

2. Mörtel zur Verwendung nach Anspruch 1, aus 11 bis 17 Trockengewichtsprozent Aluminiumpulver, 18 bis 31 Trockengewichtsprozent Eisenoxid, 8 bis 18 Trockengewichtsprozent in Wasser gelöstes Magnesiumsulfat und 44 bis 60 Trockengewichtsprozent Magnesiumoxid.

3. Mörtel nach Anspruch 2, aus 11 bis 17, vorzugsweise 14,5 Trockengewichtsprozent Aluminiumpulver in pratziger oder kugeliger Form (nicht plättchenförmig), 18 bis 31, vorzugsweise 25 Trockengewichtsprozent Eisenoxid in Form von Eisenerzkonzentrat oder Zunder, 8 bis 18, vorzugsweise 10 Trockengewichtsprozent Magnesiumsulfat, in Wasser gelöst und 44 bis 60, vorzugsweise 50,5 Trockengewichtsprozent Magnesiumoxid in Form von möglichst reinem Sintermagnesit oder Periklas.

4. Mörtel nach Anspruch 2 oder 3, **dadurch gekennzeichnet,** daß die Teilchengröße des Aluminiums und des Eisenoxids 5 bis 200 µm und die des Magnesiumoxids 0,001 bis 2 mm, vorzugsweise bis höchstens 1 mm beträgt.

## Claims

1. Application of a reactive, refractory mortar made from a mixture comprising a reduction means, an oxidisation means, a binder made up with water and a refractory filler, for pointing of refractory kiln linings made of refractory bricks, especially for revolving tubular kilns, its composition being selected in such a way that the reaction, after a predetermined penetration depth into the joints is achieved, automatically ceases leaving a part of the mortar in the joints which is not burned through.

2. Mortar for use as claimed in Claim 1, made from 11% to 17% by dry weight powdered aluminium, 18% to 31% by dry weight iron oxide, 8% to 18% by dry weight magnesium sulphate dissolved in water and 44% to 60% by dry weight magnesium oxide.

3. Mortar as claimed in Claim 2, made from 11% to 17%, preferably 14.5% by dry weight powdered alumimum in claw or globular form (not flaked), 18% to 31%, preferably 25% by dry weight iron oxide in the form of iron ore concentrate or scale, 8% to 18%, preferably 10% by dry weight magnesium sulphate dissolved in water and 44% to 60% preferably 50.5% by dry weight magnesium oxide in the form of maximum purity sintered magnesite or periclase.

4. Mortar as claimed in Claims 2 or 3, characterised in that the particle size of the aluminium and of the iron oxide is 5 to 200µm and that of the magnesium oxide is 0.001 to 2mm, preferably not more than 1 mm.

## Revendications

1. Utilisation d'un mortier réfractaire, réactif, fait d'un mélange d'un produit de réduction, d'un oxydant, d'un liant gâché à l'eau et d'une charge réfractaire, pour le jointoiement de garnitures intérieures réfractaires de fours en briques réfractaires, en particulier pour fours tubulaires tournants, dont la composition est choisie de manière que la réaction s'éteigne d'elle-même après une profondeur de pénétration prédéterminée dans les joints et qu'il reste dans les joints une partie non complètement cuite du mortier.

2. Mortier pour utilisation selon la revendication 1, constitué de 11 à 17 pour cent en poids sec de poudre d'aluminium, de 18 à 31 pour cent en poids sec d'oxyde de fer, de 8 à 18 pour cent en poids sec de sulfate de magnésium dissous dans l'eau et de 44 à 60 pour cent en poids sec d'oxyde de magnésium.

3. Mortier selon la revendication 2, constitué de 11 à 17, de préférence de 14,5 pour cent en poids sec de poudre d'aluminium sous forme de granules irréguliers ou de billes (non sous forme de plaquettes), de 18 à 31, de préférence de 25 pour cent en poids d'oxyde de fer sous forme de concentré de minerai de fer ou de mâchefer, de 8 à 18, de préférence de 10 pour cent en poids sec de sulfate de magnésium, dissous dans l'eau et de 44 à 60, de préférence de 50,5 pour cent en poids sec d'oxyde de magnésium sous forme de magnésite frittée aussi pure que possible ou de périclase.

4. Mortier selon la revendication 2 ou 3, caractérisé en ce que la grosseur des particules de l'aluminium et de l'oxyde de fer est de 5 à 200 µm et celle de l'oxyde de magnésium de 0,001 à 2 mm, de préférence jusqu'à 1 mm au maximum.
